(19) Europäisches Patentamt

European Patent Office

Office européen des brevets

(11) Publication number: **0 327 865 B1**

(12) **EUROPEAN PATENT SPECIFICATION**

(45) Date of publication of patent specification: **28.07.93** (51) Int. Cl.⁵: **G07C 3/00**, G01H 1/00

(21) Application number: **89101025.8**

(22) Date of filing: **20.01.89**

(54) **Turbine blade fatigue monitor.**

(30) Priority: **04.02.88 US 152266**

(43) Date of publication of application:
**16.08.89 Bulletin 89/33**

(45) Publication of the grant of the patent:
**28.07.93 Bulletin 93/30**

(84) Designated Contracting States:
**BE CH DE ES FR GB IT LI SE**

(56) References cited:
EP-A- 0 179 618      FR-A- 2 349 828
GB-A- 2 143 037      US-A- 3 597 963
US-A- 3 654 803      US-A- 3 680 363
US-A- 4 335 600      US-A- 4 518 917

(73) Proprietor: **WESTINGHOUSE ELECTRIC COR-
PORATION
Westinghouse Building Gateway Center
Pittsburgh Pennsylvania 15235(US)**

(72) Inventor: **Kendig, Robert Paul
2163 Pendleton Drive
Monroeville, PA 15146(US)**
Inventor: **Lucheta, Roger Angelo
P-O. Box 198
Murrysville, PA 15668(US)**
Inventor: **McKendree, Francis Speed
105 Lavery Street
Pittsburgh, PA 15235(US)**

(74) Representative: **Fleuchaus, Leo, Dipl.-Ing. et al
Melchiorstrasse 42
W-8000 München 71 (DE)**

EP 0 327 865 B1

**Description**

BACKGROUND OF THE INVENTION

Field of the Invention

The present invention is generally related to measurement of fatigue caused by vibration and, more particularly, to the measurement of accumulated metal fatigue in the rotor of a turbine.

Description of the Related Art

Conventionally, stresses in turbine blades, like in other devices, are measured using strain gauges which attach directly to the turbine blade and communicate to monitoring equipment outside the turbine via slip rings or telemetry. An alternative system has undergone development at the Arnold Engineering Development Center of the U.S. Air Force Systems Command. The Arnold system utilizes line-focusing photo detectors which provide non-interference measurement of jet engine turbine rotor blade deflection. The sensors are closely spaced on the periphery of the engine casing with each sensor radially aligned and the group of sensors aligned with the path of the rotor blade tips. Two sensors are used for detecting non-integral vibration, i.e., vibration at frequencies other than multiples of the rotation speed. Four sensors are used for detecting integral vibration, i.e., vibration at a frequency which is a multiple of the rotation speed. The signals produced by these sensors can be processed with reference to a once-per-revolution signal to determine amplitude, frequency and phase of the vibration of the each blade in a row. An additional set of these sensors is required for each row which is monitored.

Upon the deflection data provided by the sensors, stress information for all blades in each instrumented row can be determined on-line by using transfer functions to convert the deflection data to stress. These transfer functions can be determined using finite-element analysis and bench-testing of each row of blades before operational testing. While the information provided by the Arnold system is useful, particularly in testing recently serviced turbines, additional information is desirable for an on-line system which is used to monitor a turbine during operation.

On-line blade monitoring is disclosed in the following patents: U.S. Patent No. 4,518,917 discloses an apparatus for continuously monitoring the vibration of the blades of turbine rotors so as to determine abnormal turbine operating conditions. British Patent No. 2,143,037 relates to the monitoring of vibration of the blades of turbine rotors wherein two spaced sensors determine blade distance which varies as a result of fibration and, thus, permit the monitoring of blade vibration during turbine operation.

It is the object of the present invention to utilize on-line blade vibration monitoring equipment to accurately determine blade fatigue or expired expectancy that is rather remaining life of a turbine blade as a result of vibration and load stresses. With this object in view, the present invention resides in a continuous measuring apparatus for measurement of accumulated mechanical fatigue of vibrating members of a bladed turbine rotor so as to compute "fatigue usage" as a measure of accumulated fatigue to learn regarding a remaining life of the vibrating members before fatigue breakdown, said apparatus comprising a rotor torque sensor, sensors mounted proximate to a vibrating member for generating a displacement signal indicating displacement of said vibrating members caused by vibration of the member; and fatigue accumulation means for calculating "fatigue usage" in the member in dependence upon the displacement signal, characterized in that said fatigue accumulation means includes means subjecting the displacement signal generated by said sensors to a Hilbert transformation for determining frequency and amplitude of vibration of the turbine blades and means utilizing Goodman's law as applied to the frequency and amplitude of the vibration of the turbine blades with the addition of torque stress as determined by the rotor torque sensor to compute fatigue usage by accumulating fatigue of turbine blades.

It also resides in an on-line fatigue measuring method for measuring fatigue of turbine blades in a turbine, having at least two vibration sensors positioned outside a row of the turbine blades for detecting passage of the turbine blades without contact therewith so as to produce sensor signals; and a torque sensor for sensing torque generating by the turbine characterized by the steps of: using Hilbert transformation for determining frequency and amplitude of vibration of the turbine blades from the sensor signals produced by said two sensors; and computing fatigue usage as an accumulation of fatigue of the turbine blades by application of Goodman's law to the frequency and the amplitude of the vibration of the turbine blades with the addition of steady stress on the turbine blades the steady stress being determined in dependence upon the torque sensed by the torque sensor.

Preferably at least two sensors are positioned outside a path taken by the turbine blades. When N sensors are used, the vibration and fatigue usage to the n/2'th harmonic can be computed. Twenty-four sensors will give the effect of all harmonics to the 12th, but only fewer sensors are necessary if it can be determined that fewer harmonics are active.

The invention will become more readily apparent from the following description of a preferred embodiment, given by way of example only, in the accompanying drawing wherein:

Fig. 1 is a perspective view of a turbine shaft and one row of blades with sensors indicated as used in the context of the present invention;

Fig. 2 is a block diagram of a preferred embodiment of the present invention;

Fig. 3 is a schematic diagram illustrating how a blade is identified by the system;

Figs. 4A and 4B are graphical illustrations of displacement of a turbine blade from an expected position caused by vibration;

Fig. 5 is a flowchart of the method used by the present invention to assess accumulated fatigue; and

Fig. 6 is a graphical representation of vibration of the turbine blade.

Many types of devices are subject to stresses that build up or accumulate fatigue which eventually causes defects to appear in the material of which the device is made. The amount of fatigue which a device can withstand is termed "fatigue life" and the amount of fatigue which a device has withstood is termed "fatigue usage". By accumulating the fatigue usage, the remaining fatigue life can be calculated from equation (1).

$$2 \int_0^t \{(\epsilon_a(t)/\epsilon_F - \epsilon_m(t)) - (\epsilon_1/\epsilon_F)\}^2 \, F(t) \, dt = 1 \qquad (1)$$

Equation (1) can be derived from Goodman's law and Miner's hypothesis, where $\epsilon_a(t)$ is the actual vibratory stress, $\epsilon_F$ is the stress which causes failure from application of a single load ignoring the formation of a plastic hinge, $\epsilon_m(t)$ is a slowly varying or essentially steady stress, $\epsilon_1$ is the limit stress which causes failure at, e.g., the millionth vibration, and $F(t)$ is the frequency of the vibration. The values $\epsilon_F$ and $\epsilon_1$ are conventionally determined for a specific object by laboratory measurement or finite element analysis. In the case of a turbine rotor, within each row the blades are ordinarily shaped the same, but one row is different from another. Therefore, the values $\epsilon_F$ and $\epsilon_1$ would be determined separately for each row of turbine blades.

Similarly, the steady stress $\epsilon_m$ on an object to be monitored by the present invention must be determined beforehand as a function of measurable values. In the case of turbine blades, the torque generated by the turbine could be directly measured or calculated from measurements of inlet enthalpy $H_1$, outlet enthalpy $H_2$, angular speed $\omega$ and mass flow rate $\dot{m}$, which may then be combined with stage efficiency n, mean blade diameter $r_b$ and the number of blades per row $M_b$ to calculate a relationship between the steady stress $\epsilon_m$ and the torque as indicated in equation (2).

$$\epsilon_m \sim \dot{m}(H_1-H_2)n/\omega \, M_b \, r_b \qquad (2)$$

Thus, knowing the limit stress $\epsilon_1$, single load failure stress $\epsilon_F$ and the distribution of torque in a turbine, the fatigue usage can be calculated from torque, measured either directly or indirectly, and the amplitude and frequency of vibrations of individual turbine blades. The actual vibratory stress $\epsilon_a(t)$ relationship to amplitude of blade tip deflection can be measured using a stress/strain gauge mounted on a disassembled turbine rotor.

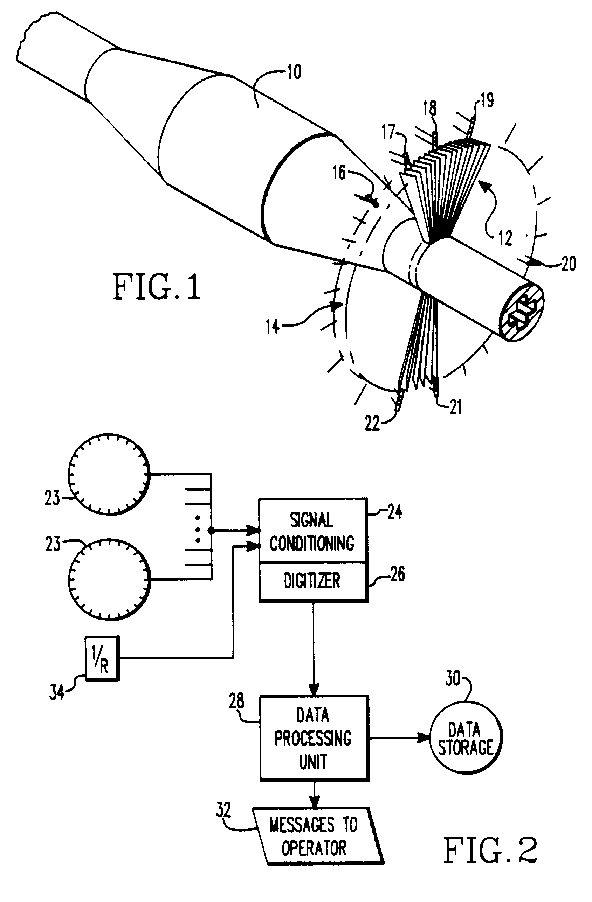

A conventional rotor shaft 10 of a turbine, together with some of the turbine blades 12 in one row 14 of turbine blades is illustrated in Fig. 1. In accordance with the present invention, sensors 16-22 are positioned outside a path taken by the turbine blades in radial alignment with the blades. Only seven sensors are fully illustrated in Fig. 1, but additional sensors could be positioned as indicated by the tick marks around the turbine blade disk 14.

As illustrated in Fig. 2, several groups 23 of sensors are provided, one group 23 for each of the rows of the turbine whose blades are to be monitored. This may not be every row, depending upon the construction of the turbine, maintenance experience, etc. For example, if within several rows of blades, experience shows that the first breakage always occurs in one or two of the rows, it may be sufficient to monitor only those rows which are likely to suffer the most from fatigue. The groups 23 of sensors provide means for generating a displacement signal indicating displacement of an object, such as a turbine blade caused by vibration. The displacement signals produced by the groups 23 of sensors are supplied to signal conditioning circuitry 24 which removes identifiable noise and strengths the signals as necessary before the signals are supplied to a digitizer 26. The digitizer 26 performs analog/digital conversion to detect changes in the signals output by the groups 23 of sensors and provide digital data that can be processed by a data processing unit 28. The data processing unit 28 uses formulas and data stored in a data storage unit 30 to provide fatigue accumulation means for calculating fatigue usage in dependence upon the displacement signals. The fatigue usage is recorded in the data storage unit 30 and put out to an operator as messages 32.

The data processing unit 28 performs several functions in order to calculate fatigue usage. First, it is necessary to identify which blade is being detected by a sensor. As described herein, this determination is made using a once-per-revolution signal supplied by a sensor 34. The position of each of the blades at the time the once-per-revolution signal is generated is known. The time between generations of adjacent once-per-revolution signals can be used to calculate the angular speed of the blades.

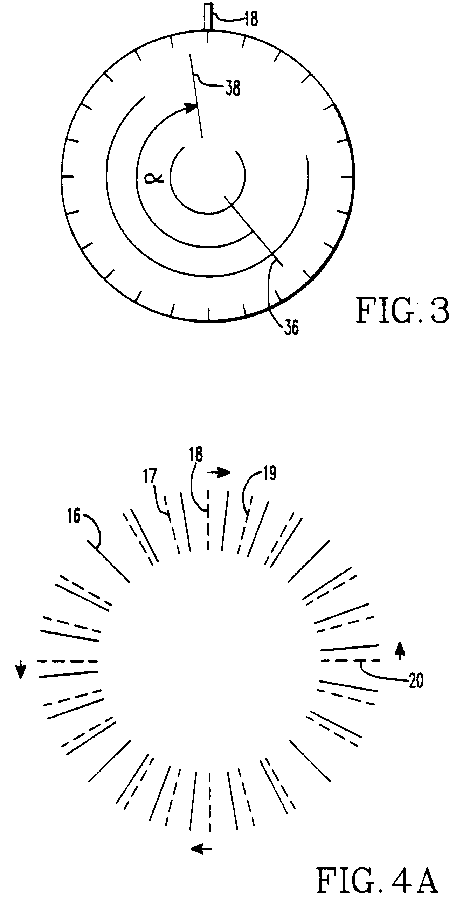

The once-per-revolution signal is also used to determine the position of a blade. This is accomplished as illustrated in Fig. 3. Assuming one of the blades 12 is at position 36 when the once-per-revolution signal is received, it will be approaching sensor 18 at position 38 after having moved an angular displacement $\alpha$. The time required for a turbine blade to move from position 36 to position 38 can be determined from the angular velocity . The data processing unit 28 is thus able to calculate an expected arrival time for each of the blades 12 at each of the sensors, e.g., 16-22, based upon the once-per-revolution signal.

The difference between expected and actual arrival time is illustrated for a twenty-four (24) sensor per row system in Fig. 4A. The expected arrival time is indicated by dashed lines while the actual position of a rotor blade 12 at that time is indicated by a solid line. The sensor positions which correspond to the sensors illustrated in Fig. 1 have corresponding reference numerals in Fig. 4A. The rotor blade illustrated in Fig. 4A is oscillating approximately twice for every revolution of the turbine blades. As illustrated in Fig. 4A, the blade being monitored arrives at sensor 16 at the expected time. However, it arrives at sensors 17-19 before the expected time and at sensor 20 after the expected time. As is evident from Fig. 4A, sensors 18 and 20 respectively provide the maximum positive and negative displacements measured by the sensors. Approximately the same measurements are provided by the sensors opposite sensors 18 and 20 since the blade is vibrating at approximately twice the revolution speed of the turbine. If it was vibrating three times as fast as the rotation speed, there would be three each maximum positive and maximum negative displacements.

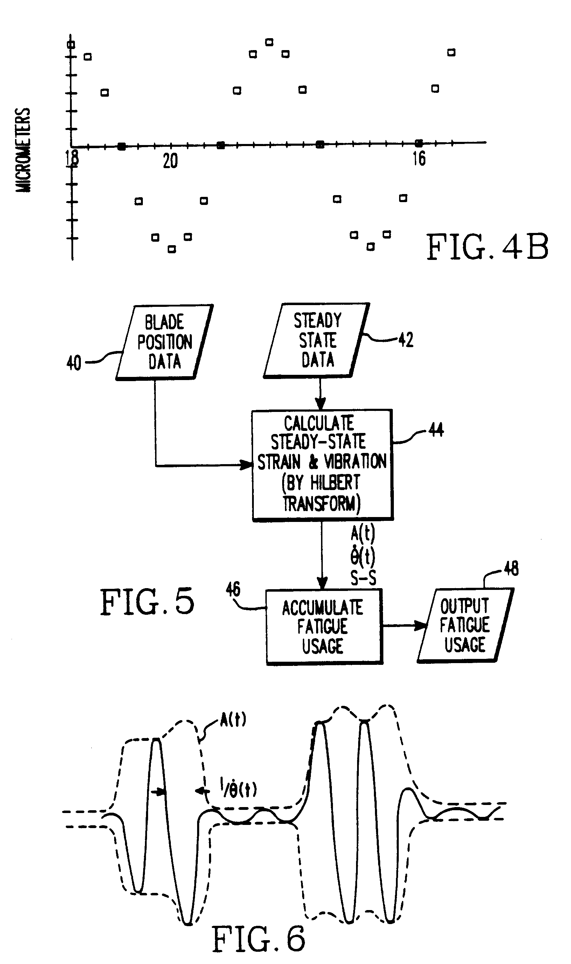

The amount of displacement measured by each of the sensors is illustrated in Fig. 4B. The measurement made by sensor 18 is shown along the y-axis and the measurements of sensors 16 and 20 are indicated by reference numerals along the x-axis. The oscillatory nature of the vibration is more readily apparent from the graphical representation in Fig. 4B.

As indicated in Fig. 5, blade position data 40 and steady state data 42 is used to calculate vibration and steady state stress in step 44. By using 24 sensors evenly spaced around the row of the turbine blades, the amplitude modulation and frequency modulation of vibration at frequencies up to twelve times the speed of the rotor shaft 10 (the twelfth harmonic) in dependence upon the displacement signals, can be determined. If necessary, the data processing unit 28 can interpolate between the detected points. All significant vibrations of turbine rotor blades are expected to occur below the twelfth harmonic. If fewer sensors are used, the higher frequency vibrations will be aliased within the detected range of frequencies. As a result, as few as two sensors can be used. However, additional signal processing in step 44 is required when few sensors are used.

Two inspection ports, approximately 135° apart, are commonly provided on turbines used for electrical power generation. This permits two passive proximity probes, such as magnetic or capacitive proximity probes, or optical sensors to be installed and used during operation of the turbine. Sensors 16 and 20 are illustrated in Fig. 1 approximately 135° apart and thus are representative of a two sensor per row system for generating signals indicative of the proximity of the turbine blades to the probes.

The two sensors 16 and 20, when used alone, are able to detect all vibrations at frequencies less than the frequency of rotation of the turbine. Thus, if the turbine is rotating at 3600 rpm, vibrations at frequencies less than 60 Hz can be detected. Higher frequencies can be detected as aliased signals. According to a preferred embodiment of the present invention, a Hilbert transform of the displacement signal which provides blade position data 40 is preferably used to determine the frequency and amplitude of the turbine blades. The Hilbert transform of a vibration signal v(t) is defined in equation (3).

4

$$H(v(t)) = (1/\pi) \int_{-\infty}^{\infty} [v(u)/(t-u)] \, du \qquad (3)$$

The magnitude or amplitude envelope of the signal v(t) is defined by equation (4).

$$A(t) = |v(t)| = \sqrt{v(t)^2 + H(v(t))^2} \qquad (4)$$

This corresponds to the amplitude envelope A(t) indicated by dashed lines in Fig. 6. The instantaneous frequency $\dot{\theta}$ is defined by equation (5) where $\theta(t)$ is defined by equation (6).

$$\dot{\theta}(t) = (1/2\pi)(d\theta(t)/dt) \qquad (5)$$

$$\theta(t) = \arctan(H(v(t))/v(t)) \qquad (6)$$

This technique is used to find the amplitude envelope A(t) and instantaneous frequency $\dot{\theta}(t)$. These are supplied together with the steady state stress S-S to step 46 so that fatigue usage can be accumulated in dependence upon the vibration of the turbine blades 12. The instantaneous frequency $\dot{\theta}(t)$ provides the value of F(t) and the amplitude A(t) can be converted to actual vibratory stress $\epsilon_a(t)$ using data, generated in laboratory tests which correlates tip deflection and stress, that is stored in the data storage unit 30. Thus, all of the terms required in equation (1) to accumulate fatigue usage are available in step 46 so that fatigue usage can be generated in step 48.

It should be noted that equation (1) assumes that the steady state stress $\epsilon_m(t)$ and vibratory stress $\epsilon_a(t)$ should be algebraically added to provide a conservative estimate of accumulated fatigue. Finite element analysis can be used to determine an appropriate manner to add vibratory and steady state stress if it is desired to more closely predict the fatigue life of the object being monitored.

The present invention has been described primarily as applied to fatigue in turbine rotors. Similar types of objects to which the present invention could be applied include airfoils, propeller blades and the compressor section of jet engines. Also, fretting in steam generator tubes accumulates due to vibration in a manner similar to fatigue. Thus, the present invention could be applied to accumulating fretting of steam generator tubes by the use of appropriate sensors. In general, any force exhibiting a "bursty" signature, like that illustrated in Fig. 6 with sudden increases in amplitude for short periods of time, and causing damage which is cumulative may be monitored by assessing accumulated damage according to the present invention.

| IDENTIFICATION OF REFERENCE NUMERALS USED IN THE DRAWINGS | | |
|---|---|---|
| LEGEND | REF. NO. | FIGURE |
| SIGNAL CONDITIONING | 24 | 2 |
| DIGITIZER | 26 | 2 |
| DATA PROCESSING UNIT | 28 | 2 |
| DATA STORAGE | 30 | 2 |
| MESSAGES TO OPERATOR | 32 | 2 |
| BLADE POSITION DATA | 40 | 5 |
| STEADY STATE DATA | 42 | 5 |
| CALCULATE STEADY-STATE STRAIN & VIBRATION (BY HILBERT TRANSFORM) | 44 | 5 |
| ACCUMULATE FATIGUE USAGE | 46 | 5 |
| OUTPUT FATIGUE USAGE | 48 | 5 |

**Claims**

1. A continuous measuring apparatus for measurement of accumulated mechanical fatigue of vibrating members (12) of a bladed turbine rotor so as to compute "fatigue usage" as a measure of accumulated fatigue to learn regarding a remaining life of the vibrating members (12) before fatigue breakdown, said apparatus comprising a rotor torque sensor, sensors (16, 22) mounted proximate to a vibrating member for generating a displacement signal indicating displacement of said vibrating members (12) caused by vibration of the member; and fatigue accumulation means (28, 30) for calculating "fatigue usage" in the member in dependence upon the displacement signal, characterized in that said fatigue accumulation means includes means subjecting the displacement signal generated by said sensors (16, 22) to a Hilbert transformation for determining frequency and amplitude of vibration of the turbine blades and means utilizing Goodman's law as applied to the frequency and amplitude of the vibration of the turbine blades with the addition of torque stress as determined by the rotor torque sensor to compute fatigue usage by accumulating fatigue of the turbine blades.

2. An apparatus as recited in claim 1, characterized in that said sensors (12) are passive proximity probes (23) for generating signals indicative of proximity of the member to said passive proximity probes.

3. An apparatus as recited in claim 1, characterized in that said sensors (12) comprise means for optically detecting the displacement of the member.

4. An apparatus as recited in claim 1, wherein said vibrating members are the turbine blades, characterized in that said sensor means comprises at least two sensors positioned outside a path taken by the turbine blades.

5. An apparatus as recited in claim 4, characterized in that approximately 24 vibration sensors are evenly spaced around a row of the turbine blades for detecting passage of said blades.

6. An on-line fatigue measuring method for measuring fatigue of turbine blades in a turbine, having at least two vibration sensors positioned outside a row of the turbine blades for detecting passage of the turbine blades without contact therewith so as to produce sensor signals; and a torque sensor for sensing torque generating by the turbine characterized by the steps of: using Hilbert transformation for determining frequency and amplitude of vibration of the turbine blades from the sensor signals produced by said two sensors; and computing fatigue usage as an accumulation of fatigue of the turbine blades by application of Goodman's law to the frequency and the amplitude of the vibration of the turbine blades with the addition of steady stress on the turbine blades, the steady stress being determined in dependence upon the torque sensed by the torque sensor.

7. A method as in claim 6, characterized in that two of said vibration sensors are arranged circumferentially around said blades and angularly spaced by 135°.

**Patentansprüche**

1. Ein kontinuierliches Meßgerät zur Messung akkumulierter mechanischer Ermüdung von Schwingungsgliedern (12) eines beschaufelten Turbinenläufers zur Berechnung der "Ermüdungsabnutzung" als Maß der akkumulierten Ermüdung zur Feststellung der Restlebensdauer der Schwingungsglieder (12) vor Eintreten eines Ermüdungsbruchs, wobei dieses Gerät enthält: Einen Läuferdrehmomentsensor, in der Nähe eines Schwingungsglieds montierte Sensoren (16, 22) zur Erzeugung eines Auslenksignals, das die durch die Schwingungen dieser Glieder verursachte Auslenkung dieses Schwingungsglieds anzeigt; und Ermüdungs-Akkumulationsmittel (28, 30) zur Berechnung der "Ermüdungsabnutzung" in dem Glied in Abhängigkeit vom Auslenksignal, dadurch gekennzeichnet, daß dieses Ermüdungsakkumulationsmittel Mittel enthält zur Bearbeitung des durch diese Sensoren (16, 22) erzeugten Auslenksignals durch eine Hilbert-Transformation zur Bestimmung von Frequenz und Amplitude der Schwingung der Turbinenlaufschaufeln, und Mittel zur Anwendung von Goodmans Gesetz auf Frequenz und Amplitude der Schwingung der Turbinenlaufschaufeln mit Addition der vom Läuferdrehmoment-Sensor bestimmten Drehmomentbeanspruchung zur Berechnung der Ermüdungsabnutzung durch Akkumulieren der Ermüdung der Turbinenlaufschaufeln.

2. Ein Gerät gemäß Anspruch 1, dadurch gekennzeichnet, daß in diesen Sensoren (12) passive Näherungssonden (23) zur Erzeugung von Signalen, die den Abstand des Glieds zu diesen passiven Näherungssonden anzeigen, vorhanden sind.

**3.** Ein Gerät gemäß Anspruch 1, dadurch gekennzeichnet, daß in diesen Sensoren (12) Mittel zur optischen Erfassung der Auslenkung dieses Glieds enthalten sind.

**4.** Ein Gerät gemäß Anspruch 1, wobei diese Schwingungsglieder die Turbinenlaufschaufeln sind, dadurch gekennzeichnet, daß dieses Sensormittel mindestens zwei Sensoren außerhalb des Turbinenlaufschaufelwegs enthält.

**5.** Ein Gerät gemäß Anspruch 4, dadurch gekennzeichnet, daß etwa 24 Schwingungssensoren abstandsgleich um eine Reihe von Turbinenlaufschaufeln zur Erfassung des Vorbeigehens dieser Schaufeln angeordnet sind.

**6.** Eine on-line Ermüdungsmessungsmethode zur Messung der Ermüdung von Turbinenlaufschaufeln in einer Turbine unter Verwendung von mindestens zwei Schwingungssensoren, die außerhalb einer Reihe Turbinenlaufschaufeln liegen, zur berührungsfreien Erfassung des Vorbeigangs der Turbinenlaufschaufeln und zur Erzeugung von Sensorsignalen; und von einem Drehmomentsensor zum Fühlen der Drehmomentgenerierung durch die Turbine, gekennzeichnet durch die folgenden Stufen: Anwendung der Hilbert-Transformation zur Bestimmung von Frequenz und Amplitude der Turbinenlaufschaufelschwingungen aus den von diesen beiden Sensoren erzeugten Sensorsignalen; und Berechnung der Ermüdungsabnutzung als Akkumulation der Ermüdung der Turbinenlaufschaufeln durch Anwendung von Goodmans Gesetz auf Frequenz und Amplitude der Schwingungen der Turbinenlaufschaufeln mit Addition der stationären Beanspruchung der Turbinenlaufschaufeln, wobei die stationäre Beanspruchung in Abhängigkeit von dem durch den Drehmomentsensor gefühlten Drehmoment bestimmt wird.

**7.** Ein Verfahren gemäß in Anspruch 6, dadurch gekennzeichnet, daß zwei dieser Schwingungssensoren umfangmäßig um diese Schaufeln herum und in einem Winkel von 135° zueinander angeordnet sind.

## Revendications

**1.** Appareil de mesure continu pour la mesure de la fatigue mécanique accumulée d'éléments vibrants (12) d'un rotor de turbine à aubes de manière à calculer "la fatigue due à l'utilisation" en tant que mesure de la fatigue accumulée pour connaître la vie restante des éléments vibrants (12) avant leur rupture pour des raisons de fatigue, ledit appareil comportant un capteur de couple de torsion du rotor, des capteurs (16, 22) montés à proximité d'un élément vibrant pour générer un signal de déplacement indiquant le déplacement desdits éléments vibrants (12) causé par la vibration de l'élément ; et un moyen d'accumulation de la fatigue (28, 30) pour calculer "la fatigue due à l'utilisation" dans l'élément en fonction du signal de déplacement, caractérisé en ce que ledit moyen d'accumulation de la fatigue comporte un moyen soumettant le signal de déplacement généré par lesdits capteurs (16, 22) à une transformation Hilbert pour déterminer la fréquence et l'amplitude de la vibration des aubes de turbine et un moyen utilisant la loi de Goodman en application à la fréquence et à l'amplitude de la vibration des aubes de turbine avec l'adjonction de la sollicitation due au couple de torsion tel qu'elle est relevée par le capteur du couple de torsion du rotor pour calculer la fatigue due à l'utilisation en accumulant la fatigue des aubes de turbine.

**2.** Appareil selon la revendication 1, caractérisé en ce que lesdits capteurs (16, 22) sont des sondes de proximité passives (23) pour générer des signaux indicatifs de la proximité de l'élément par rapport auxdites sondes de proximité passives.

**3.** Appareil selon la revendication 1, caractérisé en ce que lesdits capteurs (16, 22) comportent des moyens pour détecter optiquement le déplacement de l'élément.

**4.** Appareil selon la revendication 1, dans lequel lesdits éléments vibrants sont les aubes de turbine, caractérisé en ce que ledit moyen capteur comporte au moins deux capteurs positionnés à l'extérieur du chemin emprunté par les aubes de turbine.

**5.** Appareil selon la revendication 4, caractérisé en ce qu'environ 24 capteurs de vibration sont espacés de manière régulière autour d'une rangée d'aubes de turbine pour détecter le passage desdites aubes.

6. Méthode de mesure de la fatigue en ligne pour mesurer la fatigue d'aubes de turbine dans une turbine ayant au moins deux capteurs de vibration positionnés à l'extérieur d'une rangée d'aubes de turbine pour détecter le passage des aubes de turbine sans contact avec elles, de manière à produire des signaux de capteur ; et un capteur de couple de torsion pour capter le couple de torsion généré par la turbine, caractérisée par les étapes suivantes : utiliser la transformation Hilbert pour déterminer la fréquence et l'amplitude de la vibration des aubes de turbine à partir des signaux de capteurs produits par lesdits deux capteurs ; et calculer la fatigue due à l'utilisation en tant qu'accumulation de la fatigue des aubes de la turbine en appliquant la loi Goodman pour la fréquence et l'amplitude de la vibration des aubes de turbine avec l'adjonction de la sollicitation constante sur les aubes de turbine, la sollicitation constante étant déterminée en fonction du couple de torsion relevé par le capteur du couple de torsion.

7. Méthode selon la revendication 6, caractérisée en ce que deux desdits capteurs de vibration sont disposés sur la circonférence autour desdites aubes et espacés dans un angle de 135°.

FIG.1

FIG.2

FIG. 3

FIG. 4 A

FIG. 4B

FIG. 5

FIG. 6